# EUROPEAN PATENT APPLICATION

(11) **EP 4 109 360 A1**
(43) Date of publication of application: **28.12.2022**
(21) Application number: 21211343.5
(22) Date of filing: 30.11.2021
(51) Int. Cl.: G06Q 10/06, B64C 39/02

(54) **SYSTEMS AND METHODS FOR DETERMINING VEHICLE CAPABILITY FOR DISPATCH**

(30) Priority: 24.06.2021 US 202117357454
(71) Applicant: Honeywell International Inc., Charlotte, NC 28202 (US)
(72) Inventor: SURACE, Lawrence, Charlotte, 28202 (US)
(74) Representative: Haseltine Lake Kempner LLP

(57) **Abstract**

Disclosed are methods, systems, and non-transitory computer-readable medium for determining a capability of a vehicle for dispatch. The method may include receiving vehicle data from a vehicle located at or near a vehicle port, and a dispatch schedule, for a fleet of vehicles, from a dispatch service. The method may also include analyzing the received data to determine at least a dispatch capability of the vehicle and a maintenance state of the vehicle, the determined dispatch capability being one of authorization for dispatch with no maintenance alert, authorization for dispatch with at least one maintenance alert, or prohibition of dispatch with at least one maintenance alert. The method may further include identifying a vehicle for dispatch, and outputting the identified vehicle for dispatch to the dispatch service, and outputting the determined maintenance state of the vehicle to at least one of the dispatch service and a vehicle maintenance service.

## Description

### TECHNICAL FIELD

The embodiments of the present disclosure relate generally to systems and methods for optimization and automation for determining a capability of a vehicle, of a fleet of vehicles, for dispatch.

### BACKGROUND

The infrastructure and processes of urban air mobility (UAM) may present several challenges. For instance, UAM may require large amounts of data gathering, communication, processing, and reporting to ensure timely, safe, and efficient resource allocation for travel in the UAM environment. In particular, although UAM takeoff and landing operations may start, for example, on traditional surface helipads, these operations are envisioned to take place at UAM specific vertiports (vertical takeoff and landing (VTOL) hubs with multiple takeoff and landing pads, with infrastructure for charging and refueling) and vertistops or vertipads (single VTOL pads with minimal infrastructure). These operations will need to be more precise, both spatially and temporally, to accommodate growth in operational density of UAM. More particularly, as UAM operations increase in numbers and in frequency, there is a need for management of UAM vehicles in terms of operability and readiness for dispatch, in view of passenger ride requests, in order to optimize revenue streams of both UAM providers and On-Demand network providers, while avoiding transmission of excessive amounts of data, which could overwhelm and slow systems of the UAM providers and On-Demand network providers, or require additional infrastructure to manage relatively large amounts of data.

The present disclosure is directed to overcoming one or more of these above-referenced challenges.

### SUMMARY OF THE DISCLOSURE

According to certain aspects of the disclosure, systems and methods are disclosed for optimization and automation for determining a capability of a vehicle, of a fleet of vehicles, for dispatch from a vehicle port.

For instance, a method of determining a capability of a vehicle, of a fleet of vehicles, for dispatch from a vehicle port, may include receiving, at a service located at the vehicle port, vehicle data from a vehicle, of the fleet of vehicles, located at or near the vehicle port, receiving, at the service, a dispatch schedule, including at least one ride request, and fleet information, for the fleet of vehicles, from a dispatch service, the dispatch schedule and the fleet information being associated with the vehicle port, analyzing, using one or more processors of the service, the received vehicle data to determine at least a dispatch capability of the vehicle and a maintenance state of the vehicle, the determined dispatch capability being one of authorization for dispatch with no maintenance alert, authorization for dispatch with at least one maintenance alert, or prohibition of dispatch with at least one maintenance alert, identifying, using the one or more processors of the service, a vehicle for dispatch, of the fleet of vehicles, for a passenger ride request, of the at least one ride request, based on the determined capability and the determined maintenance state of the vehicle and the received fleet information, wherein the vehicle is identified as the vehicle for dispatch if the determined capability is one of authorization for dispatch with no maintenance alert, and authorization for dispatch with at least one maintenance alert, and outputting, from the service, the identified vehicle for dispatch to the dispatch service, and outputting, from the service, the determined capability and the determined maintenance state of the vehicle to at least one of the dispatch service and a vehicle maintenance service.

In addition, for example, a system for determining a capability of a vehicle, of a fleet of vehicles, for dispatch from a vehicle port, may include a vehicle having a memory and one or more processors, and a service, in wired or wireless communication with the vehicle, the service including a memory storing instructions, and one or more processors configured to execute the instructions to perform a process. The process may include receiving, at the service located at the vehicle port, vehicle data from the vehicle located at or near the vehicle port, receiving, at the service, a dispatch schedule, including at least one ride request, and fleet information, for the fleet of vehicles, from a dispatch service, the dispatch schedule and the fleet information being associated with the vehicle port, analyzing, using the one or more processors, the received vehicle data to determine at least a dispatch capability of the vehicle and a maintenance state of the vehicle, the determined dispatch capability being one of authorization for dispatch with no maintenance alert, authorization for dispatch with at least one maintenance alert, or prohibition of dispatch with at least one maintenance alert, identifying, using the one or more processors, a vehicle for dispatch, of the fleet of vehicles, for a passenger ride request, of the at least one ride request, based on the determined capability and the determined maintenance state of the vehicle and the received fleet information, wherein the vehicle is identified as the vehicle for dispatch if the determined capability is one of authorization for dispatch with no maintenance alert, and authorization for dispatch with at least one maintenance alert, and outputting, from the service, the identified vehicle for dispatch to the dispatch service, and outputting, from the service, the determined capability and the determined maintenance state of the vehicle to at least one of the dispatch service and a vehicle maintenance service.

Still further, for instance, a non-transitory computer-readable storage medium stores instructions that, when executed by a processor, cause the processor to perform a method for determining a capability of a vehicle, of a fleet of vehicles, for dispatch from a vehicle port. The method may include receiving, at the service located at the vehicle port, vehicle data from a vehicle, of the fleet of vehicles, located at or near the vehicle port, receiving, at the service, a dispatch schedule, including at least one ride request, and fleet information, for the fleet of vehicles, from a dispatch service, the dispatch schedule and the fleet information being associated with the vehicle port, analyzing, using the one or more processors, the received vehicle data to determine at least a dispatch capability of the vehicle and a maintenance state of the vehicle, the determined dispatch capability being one of authorization for dispatch with no maintenance alert, authorization for dispatch with at least one maintenance alert, or prohibition of dispatch with at least one maintenance alert, identifying, using the one or more processors, a vehicle for dispatch, of the fleet of vehicles, for a passenger ride request, of the at least one ride request, based on the determined capability and the determined maintenance state of the vehicle and the received fleet information, wherein the vehicle is identified as the vehicle for dispatch if the determined capability is one of authorization for dispatch with no maintenance alert, and authorization for dispatch with at least one maintenance alert, and outputting, from the service, the identified vehicle for dispatch to the dispatch service, and outputting, from the service, the determined capability and the determined maintenance state of the vehicle to at least one of the dispatch service and a vehicle maintenance service.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an example environment in which methods, systems, and other aspects of the present disclosure for determining a capability of a vehicle, of a fleet of vehicles, for dispatch from a vehicle port, may be implemented.
FIG. 2 depicts an exemplary block diagram of a system for determining a capability of a vehicle for dispatch, according to one or more embodiments.
FIG. 3 is a block diagram of a vehicle, and, in particular, of computing systems of the vehicle as a part of the system for determining a capability of a vehicle for dispatch, according to one or more embodiments.
FIG. 4 depicts a flowchart for a method of determining a capability of a vehicle, of a fleet of vehicles, for dispatch from a vehicle port, according to one or more embodiments.
FIGs. 5, 6, and 7 depict additional steps of the method shown in FIG. 4, according to one or more embodiments.

### DETAILED DESCRIPTION OF EMBODIMENTS

Various embodiments of the present disclosure relate generally to optimization and automation of determining a capability of a vehicle, of a fleet of vehicles, for dispatch from a vehicle port.

The terminology used herein may be interpreted in its broadest reasonable manner, even though it is being used in conjunction with a detailed description of certain specific examples of the present disclosure. Indeed, certain terms may even be emphasized herein. However, any terminology intended to be interpreted in any restricted manner will be overtly and specifically defined as such in this detailed description section. Both the foregoing general description and the following detailed description are exemplary and explanatory only, and are not restrictive of the features, as claimed.

As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus.

In this disclosure, relative terms, such as, for example, "about," "substantially," "generally," and "approximately" are used to indicate a possible variation of ±10% in any stated value. In addition, the term "exemplary" is used in the sense of "example" rather than "ideal." And, as used herein, the singular forms "a," "an," and "the" include plural reference unless the context dictates otherwise.

In general, the present disclosure is directed to systems and methods for determining a capability of a vehicle for dispatch from a vehicle port. A system of the present disclosure may include a vehicle having a memory and one or more processors, and a service, or a vehicle port computer, in wired or wireless communication with the vehicle. The service may include a memory storing instructions, and one or more processors configured to execute the instructions to perform a process comprising receiving vehicle data from the vehicle located at or near the vehicle port, and receiving a dispatch schedule, including at least one ride request, and fleet information, for the fleet of vehicles, from a dispatch service, the dispatch schedule and the fleet information being associated with the vehicle port. The process may also comprise analyzing the received vehicle data to determine at least a dispatch capability of the vehicle and a maintenance state of the vehicle. The determined dispatch capability may be one of authorization for dispatch with no maintenance alert, authorization for dispatch with at least one maintenance alert, or prohibition of dispatch with at least one maintenance alert. The process may further comprise identifying a vehicle for dispatch, of the fleet of vehicles, for a passenger ride request, of the at least one ride request, based on the determined capability and the determined maintenance state of the vehicle and the received fleet information. The vehicle is identified as the vehicle for dispatch if the determined capability is one of authorization for dispatch with no maintenance alert, and authorization for dispatch with at least one maintenance alert. Further, the process includes outputting the identified vehicle for dispatch to the dispatch service, and outputting the determined capability and the determined maintenance state of the vehicle to at least one of the dispatch service and a vehicle maintenance service.

While this disclosure describes the systems and methods with reference to aircraft, it should be appreciated that the present systems and methods are applicable to management of other types of vehicles, including those of drones, automobiles, ships, or any other autonomous and/or Internet-connected vehicle.

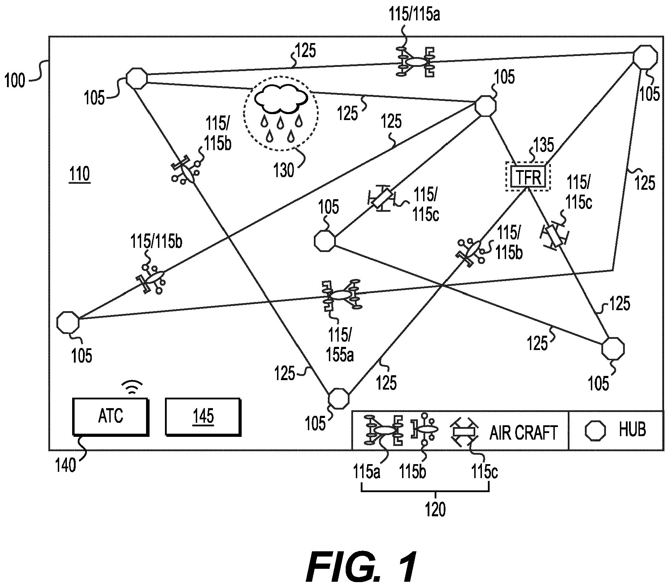

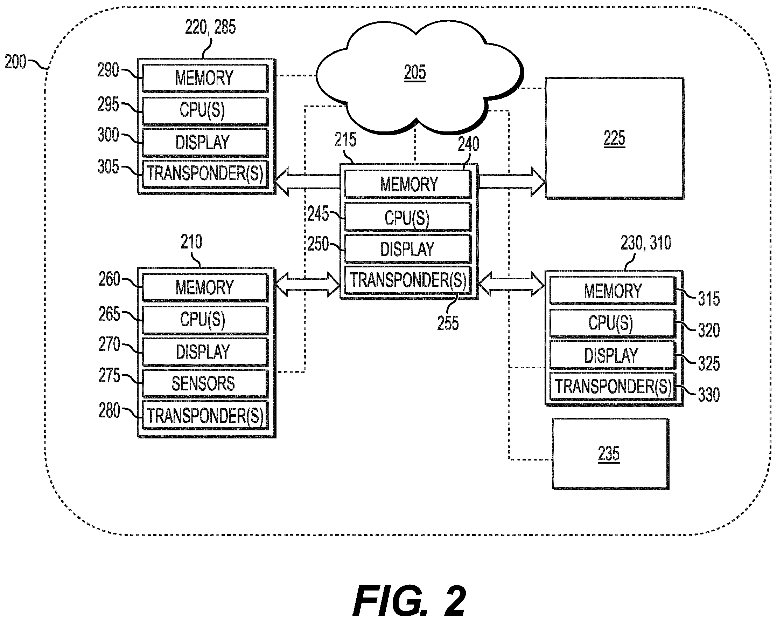

FIG. 1 shows an example environment 100 in which methods, systems, and other aspects of the present disclosure may be implemented. The environment 100 of FIG. 1 may include one or more hubs or vehicle ports 105 and the airspace 110 around the vehicle ports 105. Each vehicle port 105 may be a ground facility where aircraft 115 may take off, land, or remain parked (e.g., airport, vertiport, heliport, vertistop, helistop, temporary landing/takeoff facility, or the like). And, more specifically, a vehicle port 105 may be a single vertical takeoff and landing (VTOL) pad with minimal infrastructure, or a vehicle port 105 with multiple VTOL pads and charging and refueling infrastructure. In cases in which the vehicle port 105 is a single VTOL pad, the vehicle port 105 may be located in or on an existing building structure (e.g., a parking garage), a helipad, or an unused land surface. The airspace 110 may accommodate aircraft 115 of various types, including vehicles 115a, 115b, and/or 115c, which are different types of vehicles, shown in the legend in FIG. 1, forming a fleet 120 (also collectively referred to as vehicles 115, unless indicated otherwise herein), flying at various altitudes and via various routes or flight paths 125. Each vehicle 115 may be an apparatus capable of air transportation and capable of traveling between two or more vehicle ports 105, such as an airplane, a vertical take-off and landing aircraft (VTOL), an electric VTOL (eVOTL), a drone, a helicopter, an unmanned aerial vehicle (UAV), an all-electric vehicle, a hot-air balloon, a military aircraft, etc. The vehicles 115 may be urban air mobility (UAM) vehicles. Any one of the vehicles 115 may be connected to one another, and/or to one or more of the vehicle ports 105, in a system 200 having a network 205, shown in FIG. 2, using a computer 210 of a vehicle 115 or a computer 215 of a vehicle port 105, also referred to as the service 215. Each vehicle computer 210 may comprise a memory 260, one or more processors (central processing units (CPUs)) 265, and one or more transponders 280, as described in more detail below in connection with FIG. 2, which, collectively, are used to store, process, and transmit data to and from other elements of the system 200. With the vehicle computer 210, each vehicle 115 is capable of sampling, collating, storing, and transmitting specific vehicle and flight data. As shown in FIG. 1, different types of aircraft 115a, 115b, and 115c, which share the airspace 110, are illustrated in the figure and in the key.

As further shown in FIG. 1, the airspace 110 may have weather data 130, which may include weather-related constraints or factors considered by the vehicle port computer 215, as discussed below. In addition, the airspace 110 may be subject to restrictions and/or rules determined from air traffic control (ATC) data 135, such as temporary flight restrictions (TFR), as dictated by air traffic control (ATC) 145. These are exemplary factors that a vehicle port computer 215 may be required to consider and/or analyze when performing the processes herein relating to determining a capability of a vehicle 115 for dispatch from a vehicle port 105. In addition, FIG. 1 is provided merely as an example environment of an airspace 110 that includes exemplary types of aircraft, as examples of vehicles, hubs, zones, restrictions, and routes. Regarding particular details of the vehicles, hubs, zones, restrictions, and routes, other examples are possible and may differ from what is described above with respect to FIG. 1.

FIG. 2 depicts an exemplary block diagram of a system 200 including the vehicle port computer 215, which may be used to determine a capability of a vehicle 115 for dispatch, according to one or more embodiments. The system 200 depicted in FIG. 2 may include the network 205, one or more vehicles 115 and corresponding one or more vehicle computers 210, such as aircraft 115a, 115b, and 115c of the fleet of vehicles 120, and a service, as the vehicle port computer 215, configured to send and receive information from the one or more vehicles 115, particularly during the post-landing phase of Urban Air Mobility (UAM) passenger operations.

The service 215 may be, for example, an analytics engine (that is, an intelligent, data-driven engine) operating on the network 205 through which the service 215 connects to the vehicles 115, and the other components of the system 200, including a vehicle maintenance provider (or vehicle maintenance service) 220, one or more external databases 225, which provide information, such as the weather data 130 and air traffic control (ATC) data 135, and a dispatch service 230, which transmits information regarding a dispatch schedule, availability of a vehicle, of the fleet of vehicles 120, and passenger ride requests 235, as discussed in more detail below. The service 215 is in wired and/or wireless communication with each of the vehicle computers 210, the vehicle maintenance provider 220, the external database(s) 225, and the dispatch service 230 via the network. For example, the service 215 may be in communication with one or more of the vehicle computers 210, the vehicle maintenance provider 220, the external database(s) 225, and the dispatch service 230 via a secure, On-Demand network, as the network 205, at one of the vehicle ports 105.

The service 215 may include at least one memory 240, one or more processors (or central processing units (CPUs)) 245, a display 250, and one or more transponders 255 configured to wirelessly send and receive, that is, to exchange, data with the other elements of the system 200. The display 250 depicts information related to and in connection with the processes executed by the CPUs 245, and may display, for example, a graphical user interface (GUI) capable of receiving input from a user. The service 215 may, however, be in connection with one or more of the other elements of the system 200 via a wired connection, and, in such a case, the service 215 may include input and output connections for one or more wired connections. The service 215 may receive vehicle and flight performance data from each vehicle computer 210, corresponding to the each vehicle 115 of the fleet of vehicles 120, that approaches and/or lands at the vehicle port 105 at which the service 215 is located. That is, when a vehicle 115 approaches and/or lands at the vehicle port 105 at which the service 215 is located, the vehicle computer 210 offloads data, described in more detail below, to the service 210 via the network 205.

The vehicle computer 210 includes a memory 260, one or more processors (or CPUs) 265, a display 270, sensors 275, and one or more transponders 280. The memory 260 stores raw data received from the sensors 275, and instructions for processes to be executed by the CPUs 265, including processes to generate and display information on the display 270. The display 270 may also depict a GUI, and may be capable of receiving input from a user. In addition, the transponders 280 transmit data to and from the other elements in the network 205.

The vehicle maintenance provider 220 includes a vehicle maintenance provider computer 285 having at least one memory 290, one or more processors (or CPUs) 295, a display 300, and one or more transponders 305. The memory 290 stores data relating to vehicle maintenance, as well as instructions to be executed by the one or more processors 295. The display 300 depicts graphics, including a GUI, related to and in connection with the processes and methods executed by the one or more processors 295. The one or more transponders 305 receive and send vehicle maintenance data to other elements connect via the network 205.

The external databases 225 may provide information, such as the weather data 130 and the ATC data 135, from one or more sources or databases, such as one or more weather stations 140 and Air Traffic Control (ATC) 145. The ATC data 135 may also include rules associated with operating in the airspace 110 (e.g., Federal Aviation Administration (FAA) regulations). The dispatch service 230 includes a dispatch service computer 310 that may include at least one memory 315, one or more processors (or CPUs) 320, a display 325, and one or more transponders 330 configured to wirelessly send and receive, that is, to exchange, data with the other elements of the system 200. The display 325 depicts information related to and in connection with the processes executed by the CPUs 320, and may display, for example, a graphical user interface (GUI) capable of receiving input from a user. The dispatch service computer 310 may, however, be in connection with one or more of the other elements of the system 200 via a wired connection, and, in such a case, the dispatch service computer 310 may include input and output connections for one or more wired connections. The dispatch service computer 310 may receive passenger ride requests 235, transmitted via the network, and perform processes to set a dispatch schedule in conjunction with information regarding the fleet of vehicles 120, provided by the service 215.

In addition, the network 205 through which the above-described elements are connected may be, for example, a cloud service or a cloud-based application. The network 205 may be, for example, a 5G telecommunications infrastructure or a localized Wi-Fi network. The cloud service may also provide software as a service (SaaS) to the service 215, the vehicle 115, the vehicle maintenance provider 220, and/or the dispatch service 230, to perform various software functions, including the processes and methods described herein, in accordance with service contracts, requests from one or more of the vehicle 115, the vehicle maintenance provider 220, and/or the dispatch service 230. The cloud service is also configured to provide a secure, scalable infrastructure for collecting, aggregating, and storing data, allowing connected "things" to communicate, offering the SaaS, Infrastructure as a Service (laaS), a Platform as a Service (PaaS), and/or data lakes.

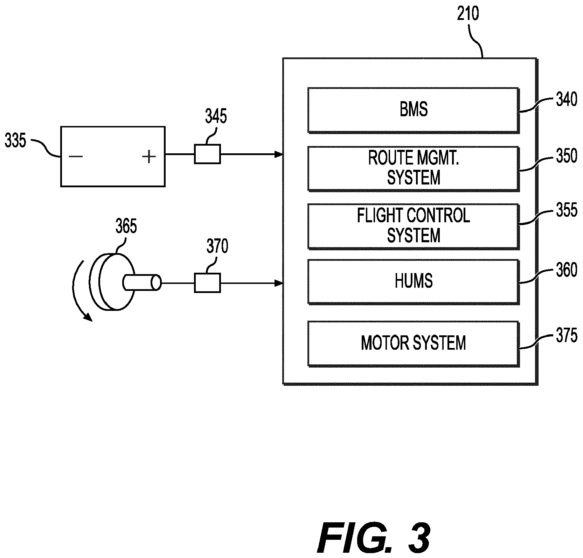

FIG. 3 is a block diagram of a vehicle, and, in particular, of the vehicle computer 210, as a part of the system 200 for determining a capability of a vehicle for dispatch, according to one or more embodiments. The vehicle computer 210 is connected to a battery 335 of the vehicle 115, and, for example, obtains information relating to the battery 335. More specifically, the vehicle computer 210 may include a battery management system (BMS) 340, which obtains a current battery charge status, a current battery temperature, and/or a comparison of a battery temperature profile of the vehicle 115 to ambient temperature for a previous flight (e.g., a most-recent flight), and outputs this information to the service 215. The BMS 340 may receive data from the battery 335 via one or more sensors 345 associated with the battery, that is, battery sensors 345, of the vehicle 215.

The vehicle computer 210 also includes a route management system 350, which obtains data relating to a flight profile of the vehicle 115. More specifically, the route management system 350 prepares a comparison of a planned flight profile and an actual flight profile for the previous flight, and outputs this information to the service 215. The vehicle computer 210 also includes a flight control system 355, which obtains vertical flight (also referred to as a hover time estimate) at existing charge, and outputs this information to the service 215. Alternatively, the BMS 340 may obtain the vertical flight at existing charge, and output this information to the service 215.

The vehicle computer 210 further includes a health and usage monitoring system (HUMS) 360, which obtains motor vibration characteristics from one or more motors 365 of the vehicle 115, and outputs this information to the service 215. The HUMS 360 may obtain data relating to the one or more motors 370 from one or more sensors 370 connected to the motors 365 (that is, motor sensors 370). In addition, the vehicle computer includes a motor system 375, which obtains a motor temperature profile of the one or more motors 365, and outputs this information to the service 215. The motor system 375 also obtains data relating to the one or more motors 370 from the motor sensors 370, which may include, for example, a temperature sensor and/or a vibration sensor/accelerometer (not shown). Although the computing systems of the vehicle computer 210 are described as including the above-noted systems, the computing systems are not limited to the above-noted systems, and other systems may be included.

The vehicle data transmitted between the vehicle computer 210 and the service 215 may include data relating to the battery 335 of the vehicle 115, for example, the current battery charge status, the current battery temperature, and/or a comparison of the battery temperature profile of the vehicle to ambient temperature for the previous flight (e.g., the most-recent flight), from BMS 340. The vehicle data may also include the comparison of the planned flight profile and the actual flight profile for the previous flight from the route management system 350, the vertical flight at existing charge from the flight control system 355 and/or from the BMS 340, the motor vibration characteristics of the one or more motors 365 from the HUMS 360, and the motor temperature profile of the one or more motors 365 from the motor system 375.

The current battery charge status defines the existing battery charge status of the battery 335 upon completion of the previous flight. This is one example of the data used to determine if the vehicle 115 can complete the next scheduled flight. The current battery temperature is an indicator of battery health and lifecycle. The comparison of battery temperature profile and ambient temperature relates battery operating temperature to ambient temperature and is useful information, particularly when trended, as part of a trend analysis discussed below, against historical information for similar flight profiles and ambient temperatures. The battery discharge rate is another indicator of battery health, as well as an operational status. The comparison of the planned flight profile and the actual flight profile is used for determining battery performance, particularly when used in conjunction with other information, such as battery discharge rates.

For example, a high battery discharge rate and high temperature may be indicative of a healthy battery in a singular event, such as increased hover time due to waiting for clearing of an obstruction on a landing/takeoff pad. However, if the vehicle 115 has flown a normal flight plan with no unusual increase in hover time, and if battery discharge rates and higher than normal temperatures are trending over time, this may be an indication of a battery life cycle issue. The vertical flight/hover time estimate is based on existing charge of the battery 335 and is associated to a planned flight profile. This measure can be important to determine how much charge time (and current) is required to complete an upcoming flight. Some planned routes may require more hover time than others, while maintaining mandated charge reserves for the battery 335. Motor vibration characteristics are collected for all motors 365, and can serve as indicators of propeller damage or other motor life issues. The motor temperature profile is collected for all motors 365, and is indicative of motor health, particularly when trended over multiple flights.

Upon landing at the vehicle port 105, the above-described data is offloaded from the vehicle computer 210, via the secure network 205, to the service 215. The offloading of data from the vehicle computer 210 may be triggered, for example, by a detection of weight on wheels (not shown) of the vehicle 115, or based on powering OFF of the motor system 375. At the point of landing of the vehicle 115 at the vehicle port 105, the service 215 establishes bidirectional communication with the vehicle computer 210 via the secure network 205, using, for example, an Edge Node and Secure Infrastructure application, through which the data is not only offloaded, but may be correlated and optimized as part of the analytics and prognostics performed within the service 215, as discussed in more detail below. In particular, as part of the optimizing of the data, only the above-described data may be transmitted from the vehicle computer 210 to the service 215, in order to reduce an amount of data being transmitted and, therefore, reduce the amount of time required to transmit data and for the service 215 to begin and complete the methods and processed described below.

The analytics and prognostics performed within the service 215 are used to determine parameters, such as vehicle dispatch capabilities from the existing vehicle port 105, as well as vehicle maintenance requirements. Operational parameters determined based on the analytics and prognostics can include, but are not limited to, operating range (on existing battery charge at time of dispatch) with safe reserves, given other known variables such as passenger weight loading and density altitude, and projected flight path profile. Vehicle performance information is also off loaded to the service 215, where prediction of future maintenance requirements can be determined. The data is offloaded from the vehicle computer 210 within a predetermined amount of time, such as, for example, 10 minutes, of a passenger offloading/boarding cycle.

The analysis of the received vehicle data may include assessing the vehicle data for high level system failures, such as excessive temperature of the battery 335 (that is, a battery temperature above a threshold temperature which may indicate battery failure or deterioration), excessive motor vibration (which may indicate motor failure or deterioration), and excessive motor temperatures (that is, a motor temperature above a threshold temperature which may indicate motor failure or deterioration). In addition or alternatively, the analysis may include assessing the vehicle 115 for border operation conditions.

The prognostics may include trend analysis, which includes an analysis of the received vehicle performance data for the most-recent flight of the vehicle 115, plotted against a series of historical information for that vehicle 115. That is, if the vehicle 115 has just completed its 150th flight, the service 215 may compare the vehicle performance data for the 150th flight to vehicle performance data of one or more of the previous 149 flights. The vehicle performance data being compared across flights of the vehicle 115 may include, for example and without limitation, battery charge statuses, battery temperatures, comparisons of battery temperature profiles against ambient temperatures, battery discharge rates, variation between planned flight paths and actual flight paths, vertical flight/hover times and estimates, motor vibration information, and motor temperatures. The service 215 may, in performing the trend analysis, highlight potential subsystem failures at a point in time when the vehicle 115 is grounded, and, therefore, prior to any inflight occurrences.

The service 215 may also receive the additional data, including the weather data 130 and/or the ATC data 135, from the external sources, e.g., the weather station 140 or ATC 145, for example. The weather data 130 and/or the ATC data 135 may be specific to the vehicle port 105 at which the service 215 is located, and/or may include weather data 130 and/or ATC data 135 for locations along flight profiles corresponding to passenger ride requests 235. The weather data 130, in particular, may include ambient temperatures at one or more elevations, wind speeds and directions, atmospheric pressure, etc. The rules associated with operating in the airspace drive vehicle equipage requirements to ensure interoperability with existing aircraft operations. The service 215 may use the received additional data in conjunction with the received vehicle performance data, to make a determination as to the capability of the vehicle 115 for dispatch. For example, the service 215 may evaluate the received weather data 130, the ATC data 135, and the vehicle performance data to establish whether any maintenance issues are, in fact, true maintenance issues, or if the maintenance issues are "false positives."

As an example, if the vehicle performance data indicates that the battery temperature exceeds the threshold battery temperature, which may be adjusted or established based on the ambient temperature at or near the vehicle port 105, the service 215 may evaluate a hover time. If the hover time exceeds a threshold amount of time, for example, of 10 minutes, the service 215 may determine that the maintenance issue (here, for example, excessive battery temperature) is a false positive, and the service 215 may adjust any vehicle maintenance data accordingly (e.g., flag the excessive battery temperature as null or not needing to be addressed). In other words, if the vehicle 115 hovered near the vehicle port 105 prior to landing for an amount of time greater than the threshold amount of time (e.g., longer than 10 minutes), the battery 335 may not require maintenance, as the excessive battery temperature could be attributed to the excessive hover time of the vehicle 115. If, however, the hover time is less than the threshold amount of time, the service 215 may establish that the excessive battery temperature is a "true" positive, or a true maintenance issue, and may include this maintenance issue in the vehicle maintenance data transmitted to the vehicle 115 and/or to the vehicle maintenance provider 220. The excessive battery temperature may indicate, for example, that one or more battery cells of the battery 335 requires replacement, and, therefore, the vehicle 115 will be flagged for maintenance (i.e., a NO-GO determination for that vehicle 115 will be made by the service 215).

Other examples of weather data 130 that the service 215 may use in conjunction with the received vehicle performance data include wind speeds and wind directions. That is, the service 215 may evaluate tailwinds, crosswinds, and headwinds that acted on the vehicle 115 during the previous flight, and that may have caused one or more of the detected maintenance issues, such as excessive motor temperature. The service 215 may, in turn, determine whether the maintenance issue is a true maintenance issue or a false positive, and make a determination of capability of the vehicle 115 for dispatch based on this determination.

The service 215 sends and receives data to and from the dispatch service 230, including a dispatch schedule, dispatch decisions, fleet and/or vehicle availability, and passenger ride requests 235. The passenger ride requests 235 may be received by the dispatch service 230 from one or more passengers or a booking agent, for example. The dispatch schedule may be formed from passenger ride requests 235, and may be modified depending on fleet and/or vehicle availability and dispatch decisions or determinations made by the service 215. The service 215, in performing the processes and methods described herein, determines whether the vehicle 115 that has just landed at the vehicle port 105 is capable of being dispatched for a next passenger ride request 235, using information from the passenger ride request 235, including destination, flight time, weather data 130, ACT data 135, etc., in addition to the vehicle data received from the vehicle 115. That is, the service 215 makes a "GO / NO-GO" determination for the vehicle 115. And, if the vehicle 115 that has just landed at the vehicle port 105 is determined not to be capable of dispatch for the next passenger ride request 235 ("NO-GO"), the service 215 can select a candidate vehicle (that is, another vehicle in the fleet of vehicles 120) capable of being dispatched for the passenger ride request 235. Once a vehicle 115 is identified as being capable of dispatch, the service 215 sends the vehicle dispatch data, including a route plan, flight profile options, a battery charge schedule, a passenger manifest, and other critical information for the flight, to the identified vehicle 115, and the vehicle 115 is then determined to be ready to load passengers and depart.

In addition, the service 215 sends vehicle maintenance data, such as identification of maintenance issues and the required maintenance to address those maintenance issues and render the vehicle 115 capable for dispatch again, to the vehicle maintenance provider 220 upon completion of the methods and processes described below. The service 215 may also transmit the vehicle maintenance data to the memory 260 of the corresponding vehicle 115, so that subsequent assessments of the vehicle 115 include updated data regarding the status and health of vehicle components, including the battery 335 and the motors 365. In particular, if the identified maintenance issue does not require maintenance/repairs immediately, for example, and the vehicle 115 is still capable of dispatch, but will require maintenance/repairs in the future, the service 215 may send, and the vehicle 115 may store the vehicle maintenance data with such an indication in the memory 260. By virtue of this storage of maintenance data, when the vehicle 115 subsequently completes a passenger ride request 235, and is assessed by a service 215 at either the same vehicle port 105 or another vehicle port 105, any required maintenance is completed when appropriate and/or necessary, without incurring unnecessary downtime for the vehicle 115. On the other hand, if the identified maintenance issue does require maintenance/repairs, the service 215 sends the vehicle maintenance data to the vehicle maintenance provider 220, including the failure or trend analysis data.

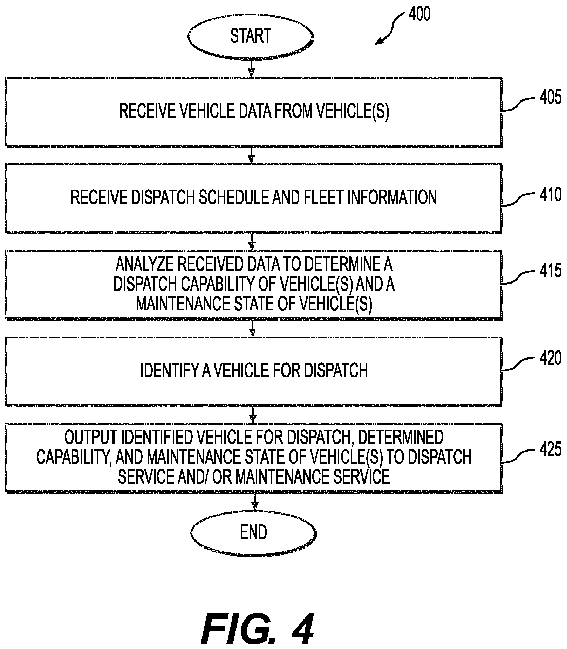

FIG. 4 depicts a flowchart for a method 400 of determining a capability of a vehicle 115, of a fleet of vehicles 120, for dispatch from a vehicle port 105, according to one or more embodiments. In particular, the method 400 may include step 405 of receiving, at the service 215 located at the vehicle port 105, vehicle data from a vehicle 115, of the fleet of vehicles 120, located at or near the vehicle port 105. Then, in step 410, the method 400 includes receiving, at the service 215, a dispatch schedule, including at least one ride request, and fleet information, for the fleet of vehicles 120, from the dispatch service 230, the dispatch schedule and the fleet information being associated with the vehicle port 105. Next, in step 415, the method 400 includes analyzing, using one or more processors of the service 215, the received vehicle data to determine at least a dispatch capability of the vehicle 115 and a maintenance state of the vehicle 115. The determined dispatch capability is one of authorization for dispatch with no maintenance alert ("GO"), authorization for dispatch with at least one maintenance alert ("GO with Alert"), or prohibition of dispatch with at least one maintenance alert ("NO-GO"). As noted above, analyzing the received vehicle data may include assessing the vehicle data for high level system failures, such as excessive temperature of the battery 335 (that is, a battery temperature above a threshold temperature which may indicate battery failure or deterioration), excessive motor vibration (which may indicate motor failure or deterioration), and excessive motor temperatures (that is, a motor temperature above a threshold temperature which may indicate motor failure or deterioration), or border operation conditions. Step 415 may include prognostics, including trend analysis, in which an analysis of the received vehicle performance data regarding the most-recent flight of the vehicle is compared to a series of historical information for the vehicle 115. The service 215 may, in performing the trend analysis, highlight potential subsystem failures prior to any inflight occurrences.

Further, the method 400 includes step 420 of identifying, using the one or more processors of the service 215, a vehicle 115 for dispatch, of the fleet of vehicles 120, for a passenger ride request 235, of received passenger ride requests, based on the determined capability and the determined maintenance state of the vehicle 115 and the received fleet information. The vehicle 115 is identified as the vehicle for dispatch if the determined capability is one of authorization for dispatch with no maintenance alert ("GO") and authorization for dispatch with at least one maintenance alert ("GO with Alert"). In addition, the method 400 includes the step 425 of outputting the identified vehicle 115 for dispatch to the dispatch service 230, and outputting, from the service 215, the determined capability and the determined maintenance state of the vehicle 115 to at least one of the dispatch service 230 and a vehicle maintenance provider 220.

The determined capability of the vehicle may be authorization for dispatch with no maintenance alert ("GO") if the determined maintenance state is no maintenance issue. Alternatively, the determined capability of the vehicle may be authorization for dispatch with at least one maintenance alert ("GO with Alert") if the determined maintenance state is a maintenance issue requiring less than or equal to a predetermined amount of time for resolution. In addition, the determined capability of the vehicle may be prohibition of dispatch ("NO-GO") if the determined maintenance state is a maintenance issue requiring greater than the predetermined amount of time for resolution.

As described above with reference to FIGs. 2 and 3, received vehicle data may include one or more of a current battery charge status, a current battery temperature, a battery temperature profile for a most-recent flight, an ambient temperature profile for the most-recent flight, a battery discharge rate for the most-recent flight, a planned flight path for the most-recent flight, an actual flight path for the most-recent flight, a vertical flight time estimate at current charge, motor vibration characteristics for one or more motors of the vehicle, and a motor temperature profile for the one or more motors of the vehicle.

In addition, as noted above, in step 415, analyzing the received vehicle data includes performing the trend analysis by comparing vehicle data from a most-recent flight of the vehicle to vehicle data from previous flights of the vehicle, before the most-recent flight. If the determined capability is prohibition of dispatch ("NO-GO"), the maintenance state, including a result of the trend analysis, is transmitted to the vehicle maintenance service 220.

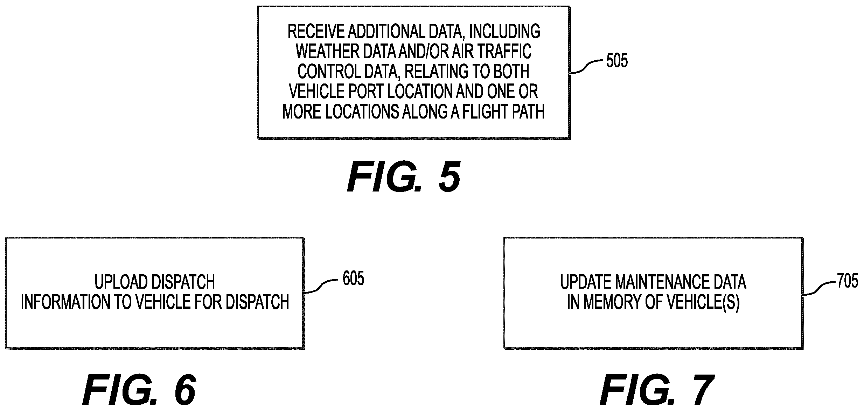

FIGs. 5, 6, and 7 depict additional steps of the method 400 shown in FIG. 4, according to one or more embodiments. That is, although the method 400 is described as including steps 405 to 425, above, the method 400 is not limited to these steps, and may further includes a step 505, shown in FIG. 5, of receiving additional data, at the service 215, including one or both of weather data 130 and ATC data 135, at the vehicle port 105 and at locations along a flight path of the passenger ride request 235. The weather data 130 and the ATC data 135 may be received from the external sources, e.g., the weather station 140 and the ATC 145, respectively. In addition or alternatively, with reference to FIG. 6, the method 400 may also include step 605 of uploading dispatch information, from the service 215 to the vehicle for dispatch, the dispatch information including at least a flight path for the passenger ride request 235. As noted above, the dispatch information may also include a route plan, flight profile options, a battery charge schedule, a passenger manifest, and other critical information for the flight. Once the vehicle 115 receives the dispatch information, the vehicle 115 is ready for loading of passengers and departure. In addition or alternatively, with reference to FIG. 7, the method 400 may include step 705 of updating maintenance data in the memory 260 of the vehicle computer 210 based on the output maintenance state of the vehicle. In this embodiment, updating the maintenance data in the memory 260 includes generating and storing maintenance requirements for future maintenance of the vehicle 115.

The steps of the method 400 described above may be executed by the one or more processors 245 of the service 215, based on instructions stored in the memory 240 of the service 215. Some steps, for example, step 705 of updating the maintenance data in the memory 260 of the vehicle computer 210 based on the output maintenance state of the vehicle, may be performed by the one or more processors 265 of the vehicle computer 210 based on instructions stored in the memory 260 of the vehicle computer 210. In addition, for example, performing the trend analysis, as part of step 415 of the method 400, may be performed by the one or more processors 265 of the vehicle computer 210 based on instructions stored in the memory 260 of the vehicle computer 210.

By virtue of the processes and systems described herein, it is possible to improve precision, spatially and temporally, of operations at the vehicle port 105 at which the service 215 is located, and to improve efficiency of use of a fleet of vehicles 120. Both of these improvements will, in turn, result in the realization of revenue streams for each UAM landing and dispatch cycle for the service 215, e.g., a provider of the UAM vehicle service. In addition, high quality vehicle status information can be obtained by the dispatch service 230, e.g., an On-Demand network provider, which provides data critical to their operations, while avoiding transmission of excessive amounts of raw vehicle information. This, in turn, allows the dispatch service 230 to focus and concentrate resources to aligning passenger ride requests 235 to offered routes.

Further, by virtue of the processes and system described herein, it is possible for the service 215, located at one or more vehicle ports 105, to connect with vehicles 115 during a post-landing phase, at which point data can be exchanged between the service 215 and the vehicles 115, prognostic and analytic tools can be applied to raw vehicle data, and high-value vehicle maintenance and dispatch information can be transmitted to and used by other services, providers, etc., (e.g., the vehicle maintenance provider 220 or the dispatch service 130) in the network 205. And, if the service 215 determines that the capability of the vehicle 115 for dispatch is "NO-GO," as described herein, the service 215 downloads specific failure or trend analysis data to the vehicle maintenance provider 220, which saves time and money and supports safe operations by preventing or reducing severity of inflight failure occurrences.

Each of the elements of the system 200 described herein may further include one or more of the following: an internal communication bus, a program storage and/or a data storage for various data files to be processed (e.g., programming or instructions) and/or communicated by the respective element, such as a read-only memory (ROM) and/or a random access memory (RAM), and/or input and output ports to connect with input and output devices such as keyboards, mice, touchscreens, monitors, displays, etc.

The general discussion of this disclosure provides a brief, general description of a suitable computing environment in which the present disclosure may be implemented. In one embodiment, any of the disclosed systems and/or methods may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, e.g., the service, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The service 215, in wireless or wired connection with the computing systems of the vehicle 115, receives the obtained information and uses the information in performing the processes described herein to determine a capability of the vehicle 115 for dispatch. And, as described herein, if the service 215 determines that the vehicle 115 is not capable of dispatch, due to maintenance requirements which require a relatively longer amount of downtime, the service 215 identifies another vehicle 115 of the fleet of vehicles 120 capable and ready for dispatch, in order to meet next passenger ride request 235.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A system for determining a capability of a vehicle, of a fleet of vehicles, for dispatch from a vehicle port, the system comprising:
a vehicle having a memory and one or more processors; and
a service, in wired or wireless communication with the vehicle, the service including a memory storing instructions, and one or more processors configured to execute the instructions to perform a process comprising:
receiving, at the service located at the vehicle port, vehicle data from the vehicle located at or near the vehicle port;
receiving, at the service, a dispatch schedule, including at least one ride request, and fleet information, for the fleet of vehicles, from a dispatch service, the dispatch schedule and the fleet information being associated with the vehicle port;
analyzing, using the one or more processors, the received vehicle data to determine at least a dispatch capability of the vehicle and a maintenance state of the vehicle, the determined dispatch capability being one of authorization for dispatch with no maintenance alert, authorization for dispatch with at least one maintenance alert, or prohibition of dispatch with at least one maintenance alert;
identifying, using the one or more processors, a vehicle for dispatch, of the fleet of vehicles, for a passenger ride request, of the at least one ride request, based on the determined capability and the determined maintenance state of the vehicle and the received fleet information, wherein the vehicle is identified as the vehicle for dispatch if the determined capability is one of authorization for dispatch with no maintenance alert, and authorization for dispatch with at least one maintenance alert; and
outputting, from the service, the identified vehicle for dispatch to the dispatch service, and outputting, from the service, the determined capability and the determined maintenance state of the vehicle to at least one of the dispatch service and a vehicle maintenance service.

2. The system of claim 1, wherein the determined capability is authorization for dispatch with no maintenance alert if the determined maintenance state is no maintenance issue, authorization for dispatch with at least one maintenance alert if the determined maintenance state is a maintenance issue requiring less than or equal to a predetermined amount of time for resolution, and prohibition of dispatch if the determined maintenance state is a maintenance issue requiring greater than the predetermined amount of time for resolution.

3. The system of claim 1, wherein the process further comprises receiving, at the service, additional data, including one or both of weather data and air traffic control data, at the vehicle port and at locations along a flight path of the ride request.

4. The system of claim 1, wherein the process further comprises uploading dispatch information, from the service to the vehicle for dispatch, the dispatch information including at least a flight path for the ride request.

5. The system of claim 1, wherein the process further comprises updating maintenance data in the memory of the vehicle, based on the output maintenance state of the vehicle.

6. The system of claim 5, wherein updating the maintenance data in the memory of the vehicle includes generating and storing maintenance requirements for future maintenance of the vehicle.

7. The system of claim 1, wherein the analyzing the received vehicle data includes performing a trend analysis by comparing vehicle data from a most-recent flight of the vehicle to vehicle data from previous flights of the vehicle, before the most-recent flight.

8. The system of claim 7, wherein, if the determined capability is prohibition of dispatch, the maintenance state, including a result of the trend analysis, is transmitted to the vehicle maintenance service.

9. The system of claim 1, wherein the received vehicle data includes one or more of current battery charge status, current battery temperature, a battery temperature profile for a most-recent flight, an ambient temperature profile for the most-recent flight, a battery discharge rate for the most-recent flight, a planned flight path for the most-recent flight, an actual flight path for the most-recent flight, a vertical flight time estimate at current charge, motor vibration characteristics for one or more motors of the vehicle, and a motor temperature profile for the one or more motors of the vehicle.

## Amended claims

### Amended claims in accordance with Rule 137(2) EPC.

1. A system (200) for determining a capability of a vehicle (115), of a fleet of vehicles, for dispatch from a vehicle port, the system comprising:
a vehicle (210) having a memory (260) and one or more processors (265);
and
a service (215), in wired or wireless communication with the vehicle, the service including a memory (240) storing instructions, and one or more processors (245) configured to execute the instructions to perform a process (400) comprising:
receiving (405), at the service located at the vehicle port, vehicle data from the vehicle located at or near the vehicle port;
receiving (410), at the service, a dispatch schedule, including at least one ride request, and fleet information, for the fleet of vehicles, from a dispatch service, the dispatch schedule and the fleet information being associated with the vehicle port;
analyzing (415), using the one or more processors, the received vehicle data to determine at least a dispatch capability of the vehicle and a maintenance state of the vehicle, the determined dispatch capability being one of authorization for dispatch with no maintenance alert, authorization for dispatch with at least one maintenance alert, or prohibition of dispatch with at least one maintenance alert;
identifying (420), using the one or more processors, a vehicle for dispatch, of the fleet of vehicles, for a passenger ride request, of the at least one ride request, based on the determined capability and the determined maintenance state of the vehicle and the received fleet information, wherein the vehicle is identified as the vehicle for dispatch if the determined capability is one of authorization for dispatch with no maintenance alert, and authorization for dispatch with at least one maintenance alert; and
outputting (425), from the service, the identified vehicle for dispatch to the dispatch service, and outputting, from the service, the determined capability and the determined maintenance state of the vehicle to at least one of the dispatch service and a vehicle maintenance service;
wherein the received vehicle data includes one or more of:motor vibration characteristics for one or more motors of the vehicle and/or a motor temperature profile for the one or more motors of the vehicle; and
a battery discharge rate, a battery temperature, and at least one of a comparison of a planned flight profile and an actual flight profile and the vertical flight time/hover time.

2. The system (200) of claim 1, wherein the process comprises determining whether the hover time exceeds a threshold amount of time.

3. The system (200) of claim 1, wherein the determined capability is authorization for dispatch with no maintenance alert if the determined maintenance state is no maintenance issue, authorization for dispatch with at least one maintenance alert if the determined maintenance state is a maintenance issue requiring less than or equal to a predetermined amount of time for resolution, and prohibition of dispatch if the determined maintenance state is a maintenance issue requiring greater than the predetermined amount of time for resolution.

4. The system (200) of claim 1, wherein the process further comprises receiving (505), at the service, additional data, including one or both of weather data and air traffic control data, at the vehicle port and at locations along a flight path of the ride request.

5. The system (200) of claim 1, wherein the process further comprises uploading (605) dispatch information, from the service to the vehicle for dispatch, the dispatch information including at least a flight path for the ride request.

6. The system (200) of claim 1, wherein the process further comprises updating (705) maintenance data in the memory of the vehicle, based on the output maintenance state of the vehicle.

7. The system (200) of claim 6, wherein updating the maintenance data in the memory of the vehicle includes generating and storing maintenance requirements for future maintenance of the vehicle.

8. The system (200) of claim 1, wherein the analyzing the received vehicle data includes performing a trend analysis by comparing vehicle data from a most-recent flight of the vehicle to vehicle data from previous flights of the vehicle, before the most-recent flight.

9. The system (200) of claim 8, wherein, if the determined capability is prohibition of dispatch, the maintenance state, including a result of the trend analysis, is transmitted to the vehicle maintenance service.
